# EUROPEAN PATENT SPECIFICATION

(11) **EP 1 892 917 B1**
(45) Date of publication and mention of the grant of the patent: **25.02.2009**
(21) Application number: 06119464.3
(22) Date of filing: 24.08.2006
(51) Int. Cl.: H04L 29/06

(54) **Method and apparatus for seamless handover**
Verfahren und Vorrichtung für nahtloses Handover
Procédé et dispositif de transfer sans interruption

(43) Date of publication of application: 27.02.2008
(73) Proprietor: NTT DoCoMo, Inc., Tokyo (JP)
(72) Inventor: Mendes, Paulo, 81673, München (DE); Veloso, Luis, 3400-662, Sao Giao (PT); Curado, Marilia, 3030-393, Coimbra (PT); Monteiro, Edmundo, 3030-393, Coimbra (PT)
(74) Representative: Betten & Resch

(56) References cited:
- WO-A2-20/06026635
- KOODLI R ET AL: "Fast Handovers for Mobile IPv6" IETF STANDARD, INTERNET ENGINEERING TASK FORCE, IETF, CH, July 2005 (2005-07), XP015041931 ISSN: 0000-0003
- GOVIND KRISHNAMURTHI NOKIA RESEARCH CENTER ROBERT C CHALMERS UC SANTA BARBARA CHARLES E PERKINS NOKIA RESEARCH CENTER: "Buffer Management for Smooth Handovers in IPv6" IETF STANDARD-WORKING-DRAFT, INTERNET ENGINEERING TASK FORCE, IETF, CH, 13 February 2001 (2001-02-13), XP015013728 ISSN: 0000-0004
- JANNETEAU C ET AL: "Comparison of Three Approaches Towards Mobile Multicast" IST MOBILE COMMUNICATION SUMMIT, XX, XX, June 2003 (2003-06), pages 1-5, XP002991583
- YOKOYAMA T ET AL: "Application-Layer Seamless Handover for Real-time Communication Service" CONSUMER ELECTRONICS, 2006. ICCE '06. 2006 DIGEST OF TECHNICAL PAPERS. INTERNATIONAL CONFERENCE ON LAS VEGAS, NV, USA 07-11 JAN. 2006, PISCATAWAY, NJ, USA,IEEE, 7 January 2006 (2006-01-07), pages 135-136, XP010896541 ISBN: 0-7803-9459-3

## Description

### FIELD OF THE INVENTION

The present invention relates to a method and an apparatus for performing a seamless handover.

### BACKGROUND OF THE INVENTION

The increasing portability of telecommunication devices combined with the astounding development of wireless technologies leads to the necessity of seamless mobility of users. Furthermore, the simultaneously emergence of multi-user real time services has emphasised the importance of the multicast communication to deliver content to several simultaneous receivers. There is however an open issue in mobile communication: the seamless handover of senders and receivers in naturally heterogeneous environments.

Multicast communication is the most appropriate technique to support multi-user real time services because it is more efficient than unicast in resource utilisation when the information is sent to several simultaneous receivers. Moreover, in a context of the receivers' mobility, multicast protocols become even more important, because when the receiver moves it is only needed to construct a new branch of the multicast tree. Nonetheless, multicast protocols were not developed to support seamless mobility, and consequently, mobility management is necessary to provide seamless handovers involving this type of communication. This way, multicast mobility management with QoS support is a challenging and unsolved task for the successful development of next generation mobile networks. Therefore, a solution that constraints losses during handover and limits the service degradation perceived by users is needed.

The problem of seamless mobility has been addressed by several proposals, including approaches aimed either at unicast or multicast communication.

However, none of the existing solutions supports simultaneously both types of communication, as is becoming a reality in nowadays and future networks. Moreover, the scope of application of previous solutions is either at the micro-mobility or macro-mobility level, requiring the combination of multiple mechanisms in order to achieve a global seamless mobility.

Additionally to the previously presented open issues concerning seamless mobility, most existing solutions that address this problem, either reduce latency or losses during handover, limiting thus the level of traffic performance that is supported during handover. Furthermore, the approaches that are able to minimise simultaneously delay and losses introduce an excessive signalling overhead in the network, since they are based on the construction of tunnels. This approach obviously leads to the waste of network resources and is associated with a high level of complexity of the mechanisms used.

In the following some prior art approaches directed to the mobility problem will be explained in somewhat more detail.

The most representative example of macromobility is the Mobile IP (MIP) (D. Johnson and C. Perkins, "Mobility Support for IPv6", RFC 3775, Internet Engineering Task Force, June 2004). In this approach, when the Mobile Node moves to another network designated by Foreign Network (FN), it informs an entity in the Home Network (HN) denominated Home Agent (HA) about its new address denominated Care of Address (CoA). The packets addressed to the Mobile Node are intercepted in the Home Network by the "Home Agent". To deliver these packets this entity establishes a tunnel with the Mobile Node or with an entity in the FN denominated Foreign Agent (FA). Despite the ability of Mobile IP to support mobility between homogeneous and heterogeneous systems it has several drawbacks: severe latency when HA and Mobile Node are distanced and packet loss during the handover.

The Hierarchical MIP (see H. Soliman, C. Catellucia, K. Malki and L. Bellier, "Hierarchical Mobile IPv6 mobility management (HMIPv6)", RFC 4140, Internet Engineering Task Force, August 2005) is a well known micromobility protocol. In this approach there is introduced the "Mobility Anchor Point" (MAP), that will act as a local Home Agent to the Mobile Nodes located in its domain. In this case there are two types of CoA: the Regional CoA (visible from the exterior and unchanged while the Mobile Node stays in the domain) and the Local CoA (local address of the Mobile Node). When the MAP receives packets destined to the Mobile Node (with the address RCoA), it will decapsulate and route these packets to the respective LCoA. When the Mobile Node moves inside a domain it will inform the MAP about the new LCoA and the RCoA remains the same. On the other hand, when the Mobile Node moves to a new domain it will register the new RCoA in the HA. By updating the location of Mobile Nodes on the Home Agent only when handover occurs to a new domain, this scheme reduces the delay. However, in this approach there is no provision to prevent packet losses.

The Fast Handovers for IPv6 (FMIP) (see R. Koodli, "Fast Handovers for Mobile IPv6", RFC 4068, Internet Engineering Task Force, July 2005) is another example of a micromobility protocol. In this solution the address of the Mobile Node is configured before it starts the handover. The protocol can be split in three phases: the handover initiation, the tunnel establishment and the packet forwarding. Initially, the Mobile Node sends a Router Solicitation Proxy (RtSolPr) message to the Previous Access Router (PAR) indicating that it desires to execute a fast handover to a New Access Router (NAR) and containing the link-layer address of the New Access Router. In return the Mobile Node receives the Proxy Router Advertisement (PrRtAdv) message from the PAR. With the information provided by this message, the Mobile Node generates the future NCoA and sends a FBU (Fast Binding Update) message to authorise PAR to bind PCoA to NCoA. This way, arriving packets can be tunnelled from PAR to the new location of the Mobile Node (NAR), where they are buffered while the Mobile Node is not attached to the NAR. After the reception of this message, the PAR sends to the NAR the message Handover Iniciate (HI) to confirm if the NCoA generated by the Mobile Node is acceptable. The NAR will respond with the message Handover Acknowledge (HAck).

Afterwards, PAR sends the message Fast Binding Acknowledgement (FBack) to the MN, The reception of this message signifies that the packets are already been forwarded to the future localisation of the MN. After arriving to the new location, the Mobile Node sends a Fast Neighbour Advertisement (FNA) to initiate the packet flow from the NAR to itself. By anticipating the movement of the Mobile Node and by constructing the NCoA before the handover occurs, FMIPv6 minimises packet losses. However, there is a large amount of signalling exchanged and this approach is supported by the construction of a tunnel.

Despite the fact that FMIPv6 minimises the packet losses and HMIPv6 reduces delay during handover, they can not individually achieve seamless local handovers. The most straightforward way to improve these proposals would be to directly integrate both. However since in the HMIPv6 approach the tunnel goes from the MAP to the Mobile Nodes (not ARs) and in the FMIPv6 tunnels are built from PAR to NAR, the direct integration will conduct to overhead and to an inefficient use of the network resources. Two main schemes try to combine HMIPv6 with the FMIPv6 in a more efficient way. The first approach, denominated F-HMIP (see H. Jung, S. Koh, H. Soliman and N. Takamiya, "Fast Handover for Hierarchical MIPv6", Internet Draft, Internet Engineering Task Force, October 2005) proposes the utilisation of tunnels between MAP and NAR, without using them between PAR and NAR (as in FMIPv6). Since this scheme uses the establishment of a tunnel during handover, it has the disadvantage of creating signalling overhead. The second approach, called Seamless Handoff Architecture for Mobile IP (S-MIP) (see R. Hsieh, Z. Zhou and A. Seneviratne, "S-MIP: A Seamless Handoff Architecture for Mobile IP", Proc. of the Conference on Computer Communications (IEEE INFOCOM), San Francisco, USA April 2003) uses a method denominated Synchronised Packet Simulcast (SPS) to send copies of each packet (s-packet) from the MAP to the PAR and to the NAR. In addition to that, packets are also forwarded from PAR to NAR (f-packets) to avoid the loss of packets. This scheme possesses the drawbacks of wasting network resources and increased complexity (for example to separate s-packets and f-packets in the NAR).

The multicast technique is the most appropriate method to forward information simultaneously to several receivers (denominated multicast group). In multicast communication, the source sends just one copy of the information and the network duplicates the packets whenever necessary, instead of sending a number of copies equal to the number of receivers. In this way, the resources are used in an efficient way. To overcome several problems originated by the combination of mobility and multicast several multicast proposals have been introduced.

The proposal denominated Home Subscription or Bidirectional Tunnelling is based on the Mobile IP architecture (see D. Johnson and C. Perkins, "Mobility Support for IPv6", RFC 3775, Internet Engineering Task Force, June 2004). When the Mobile Node is in a Foreign Network and wants to subscribe to a certain multicast group, it will establish a bidirectional tunnel with the Home Agent. Through this tunnel the Mobile Node will send the membership report messages and receive the multicast data. Every time a Mobile Node moves to a new Foreign Network, it continues receiving the multicast data through the HA. In other words, the multicast tree does not need to be rebuilt every time the Mobile Node moves to a different network. This way, the multicast must be supported only in the Home Network. Also, this approach allows the Mobile Node to subscribe to local Home Network multicast groups. However, this scheme leads to the increase of the traffic in the Home Network, and the routing of the multicast packets will not be optimal. Besides, if several Mobile Nodes have subscribed to the same multicast group in a FN, there will be packet duplication.

In the Remote Subscription approach(see C. Janneteau, Y. Tian, S. Csaba, T. Lohmar, H. Lach, and R. Tafazolli, "Comparison of Three Approaches Towards Mobile Multicast", in Proceedings of the IST Mobile & Wireless Communications Summit, Aveiro, Portugal, June 2003), the Mobile Node follows the usual behaviour of a stationary node when subscribing or leaving a multicast group. In other words, when the Mobile Node moves to a new network, it will subscribe to the multicast group through the local multicast router. This approach leads to an optimal routing and avoids the packet duplication existent in the Mobile IP based approaches. However, every time the Mobile Node moves to a new network (and no subscriber of the same group exists in this network), the multicast tree has to be readjusted causing long interruptions, and consequently, packet losses. Besides, the assumption that multicast will be supported by all the FNs is incorrect.

In order to solve the problem of lost packets during handover, some micro-mobility protocols are designed to temporary buffer those packets. In some approaches, packets are buffered in the Old Access Router and after handover, when the IP connectivity between the Mobile Node and New Access Router is established, those buffered packets are sent from the Old Access Router to the Mobile Node. This can be used, for instance, with the pre-registration of the Low Latency Handoffs in Mobile IPv4 (LLH) (see K. EI Malki, "Low Latency Handoffs in Mobile IPv4"; Internet Draft, Internet Engineering Task Force, October 2005). Other schemes buffer the packets in the New Access Router. This is the case on FMIP and on post-registration of LLH. However, none of these approaches avoids the starvation of the receiving application during handover and support the functioning of multi-user services.

WO 2006/026635 discloses a method and an aparatus for an adaptive de-jitter buffer. The de-jitter buffer for voice over IP avoids playback of underflows while balancing end-to-end delay.

As previously stated, existing solutions do not solve the seamless mobility problem, and introduce important amounts of signalling overhead and complexity in the communication system.

It is therefore an object of the invention to provide an improved seamless handover mechanism capable to provide seamless mobility, preferably to users of single and multi-user services, when they move between different Access Agents.

### SUMMARY OF THE INVENTION

The present invention is defined in the independent claims. The dependent claims define embodiments of the invention.

According to one embodiment there is provided a method for performing a seamless handover of a mobile node on which an application is running which receives data from a first access node to a second access node, said method comprising:
receiving data by a buffer of said mobile node;
consuming by said application the data stored in said buffer during handover while no new data is received by said buffer;
after handover, requesting by said mobile node data which have been received by a cache of said second access node to request therefrom the missing packets that arrived during the handover.
wherein said requesting comprises sending a fetch request message comprising the ID of the last packet which was received and stored in the buffer, and
said transmission of missing packets from said cache starts with the packet having the ID next to the one which was received by said buffer.

Thereby the handover mechanism allows the application to continue exactly at the point where the transmission was interrupted due to the handover.

According to one embodiment the method further comprises:
based on a prediction of the most probable next access nodes, sending a resource query to request reservation of resources in the most probable next access nodes;
receiving a resource query response containing information about the reservation.

The interaction with a prediction mechanism and the reservation of resources enables the preparation of the new access nodes for the handover.

According to one embodiment said second access node is in a multicast capable domain, and
if on said second access node the same session is already running, said mobile node performing the handover joins said session.

Thereby the mechanism supports multicast and increases the efficiency and reduce the overhead generated by the handover mechanism.

According to one embodiment said resource query response contains information about the available resources and the multicast group address; said method further comprising:
sending a handover bearer message to said mobile node comprising the IP address of the second access node and the multicast channels to be used in it.

This allows the mobile node to be prepared for the new environment and to directly participate in the multicast session based on the received information.

According to one embodiment the decision to which next access node the handover is performed is based on the information contained in said resource query response.

This improves the handover decision itself, e.g. by choosing a next access node which with respect to its available resources and possibly also with respect to ongoing multicast sessions is suitable to accept the mobile node as a new node in an efficient manner. E.g. a next access node which has available resources and/or possibly has running already a multicast session may be preferred over others.

According to one embodiment there is provided a mobile node for performing a seamless handover while on said mobile node an application is running which receives data from a first access node to a second access node, said mobile node comprising:
a buffer receiving data from said first access node;
a consuming module for consuming by said application the data stored in said buffer during handover while no new data is received by said buffer;
a requesting module for, after handover, requesting data which have been received by a cache of said second access node to request therefrom the missing packets that arrived during the handover
wherein said requesting module is adapted to send a fetch request message comprising the ID of the last packet which was received and stored in the buffer, and
such that transmission of missing packets from said cache starts with the packet having the ID next to the one which was received by said buffer.

According to one embodiment said second access node is located in a multicast capable domain, and
if on said second node said session is already running, said mobile node joins said session.

According to one embodiment said first access node receives a resource query response from said second access node which contains information about the available resources and the multicast group address; said mobile node further comprising:
a module for receiving a handover bearer message from said first access node comprising the IP address of the second access node and the multicast channels to be used in it.

According to one embodiment there is provided an access node in a mobile network for supporting a seamless handover of a mobile node on which an application is running which receives data from a second access node and which should handover to said access node, said mobile node receiving data by a buffer and said application consuming the data stored in said buffer during handover while no new data being received by said buffer, said access node comprising:
a cache for caching data which is to be sent to said mobile phone;
a module for receiving after handover a request from said mobile node to request from said cache the missing packets that arrived during the handover.
wherein said request comprises a fetch request message comprising the ID of the last packet which was received and stored in said buffer, and said access node further comprising:
a cache management module for identifying and transmitting said missing packets such that said transmission of missing packets from said cache starts withthe packet having the ID next to the one which was received by said buffer.

According to one embodiment the access node further comprises:
a module for receiving, based on a prediction of the most probable next access nodes to which said mobile node will perform a handover, from said second access node a resource query to request reservation of resources in the most probable next access nodes;
a module for sending a resource query response containing information about the reservation.

According to one embodiment said access node is in a multicast capable domain, and
if on said access node the same session as on said mobile node is already running, said mobile node performing the handover joins said session.

According to one embodiment said resource query response contains information about the available resources and the multicast group address to enable said second access node to send a handover bearer message to said mobile node comprising the IP address of the second access node and the multicast channels to be used in it.

According to one embodiment there is provided a handover system comprising:
a mobile node according to one of the embodiments of the invention;
an access node according to one of the embodiments of the invention as first access node, and
an access node according to one of the embodiments of the invention as second access node from which said mobile node performs a handover to said first access node.

According to an embodiment of the invention there is provided a computer program comprising program code which when being executed on a computer enables said computer to one of the following:
carry out a method according to one of the embodiments of the invention;
to operate as a mobile node according to one of the embodiments of the invention;
to operate as a an access node according to one of the embodiments of the invention.

### BRIEF DESCRIPTION OF THE DRAWINGS

Fig. 1 schematically illustrates a handover mechanism according to an embodiment of the invention.
Fig. 2 schematically illustrates the data transfer an handover mechanism according to an embodiment of the invention.
Fig. 3 schematically illustrates the components of access nodes and mobile nodes used for performing a handover mechanism according to an embodiment of the invention.
Fig. 4 schematically illustrates a handover mechanism according to a further embodiment of the invention.
Fig. 5 schematically illustrates a handover mechanism according to a further embodiment of the invention.
Fig. 6 schematically illustrates a handover mechanism according to a further embodiment of the invention.
Fig. 7 schematically illustrates a handover mechanism according to a further embodiment of the invention.
Fig. 8 schematically illustrates a handover mechanism according to a further embodiment of the invention.

### DETAILED DESCRIPTION

Before describing the invention by means of exemplary embodiments, at first some terms used in the following description are briefly explained.
- Access-Agent -: an Access Network element which is capable of executing the handover mechanism according to an embodiment of the invention
- Macro-mobility -: the movement of Mobile Nodes across different domains
- Micro-mobility -: the movement between different subnets within the same domain

According to one embodiment there is provided an approach to provide seamless mobility of users based in the combination of caching and buffering mechanisms. The proposed scheme allows users to move between different locations without packet losses, taking advantage from the capability of caches and buffers to store packets. The base of the proposed mechanism is the combination of a buffer located in the Mobile Node and a cache placed in the access network elements, named as Access-Agent, that together allow seamless handovers between access network elements.

According to one embodiment the seamless movement is supported by a buffering and caching mechanism that is responsible for supporting the movement of a Mobile Node between heterogeneous networks without losing packets. This is achieved through the combination of caches in the Access-Agents and buffers in the mobile devices that together avoid packet losses during handover, taking into consideration the prediction of next most probable Access-Agents.

According to one embodiment the basic mechanism is as follows: the cache is used to store packets in the Access-Agent located at the network and the buffer is used to store packets in the Mobile Node. During handover the data in the buffer of the Mobile Node will be read in order to avoid packet loss and to keep the data flow. This way, the occupation of the buffer will decrease until a certain level that depends on the duration of the handover, the size of the buffer and the rate used to send the packets from the buffer to the application. After handover, the Mobile Node will fetch from the cache the packets that have arrived during handover. If the packets are already present in the cache (e.g. other receiver is present in the cell), the handover mechanism can immediately recover the packets that were not received during handover. If not, it is necessary to take the necessary steps to subscribe the intended session. In this case, the seamless mobility will depend on the number of packets available on the buffer, to feed the application while the session is not active

Assuming the session is already present in the next Access Agent, it is expected that in most situations no lost packets exist, and consequently, there is no interruption in the flow.

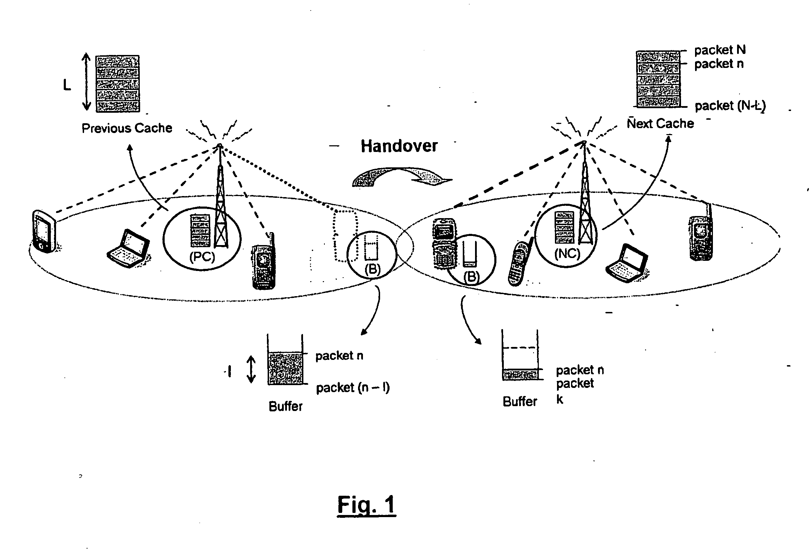

Fig. 1 shows an example of the effect of handover on the buffer, when the Mobile Node moves between two Access Agents. Here the Access Agents as well as the mobile nodes modules that interacts with each other so as to execute the described handover mechanism.

Here, the used nomenclature has the following meaning:
- I stands for the total capacity of the buffer.
- n represents the "time stamp" of the last packet entering the buffer, and consequently, represents the more recent packet present in the buffer immediately after handover (of course, if not consumed).
- k depicts the "time stamp" of the "oldest" packet present in the buffer after handover.
- L represents the total capacity of the cache.
- N describes the "time stamp" of most recent packet existent in the cache.

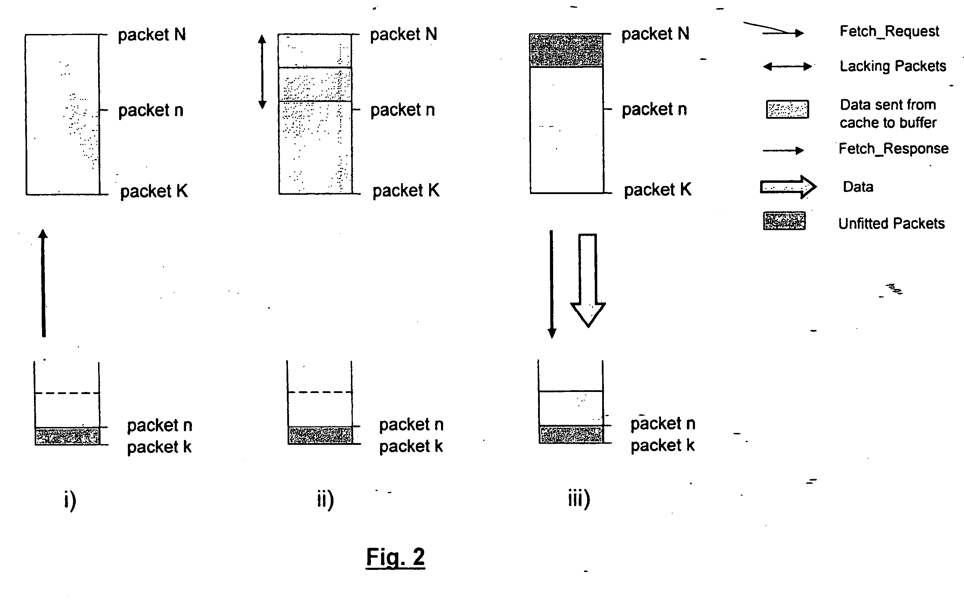

Fig. 2 shows the effect of the new handover mechanism after handover. The process of packet recovery is started by a message sent from the buffer of the Mobile Node to the cache of the new Access Agent (*Fetch_Request,* shown as arrow in part i) of Fig. 1), containing the id of the last packet received in the buffer before the handover and the amount of space still available in the buffer (i). When the cache receives the fetch request, it identifies the packets that must be sent to the Mobile Node (part ii) of Fig. 2) (namely from packet n to packet N) and sends a response message (*Fetch_Response*) ( part iii) of Fig 2). Afterwards, the cache sends the packets that were missing in the buffer of the Mobile Node, according to the request that was received from the buffer.

The described behaviour of the handover mechanism depicts the situation where there is enough space in the buffer of the Mobile Node to receive the packets that were not received during handover. However, when the cache detects that the buffer of the Mobile Node can not allocate all the packets that it is asking for, it may discard the packets that will not fit in the buffer.

The handover mechanism of caching and buffering is supported by the following messages:
- *Fetch_Request:* message sent from the Mobile Node to the new Access-Agent requesting the missing packets that arrived during the handover. This message may also trigger the flow of the arriving multicast packets (similarly to an IGMP/MLD message);
- *Fetch_Response:* response message sent from the new Access-Agent to the Mobile Node containing information related to the request (e.g. the amount of data that will be sent from the cache).

According to one embodiment the handover mechanism is enhanced by an additional mechanism in which the presence of the session in the next base station is guarantied through the use of prediction. That is, the most probable cells to where the MN will move are predicted. Based on this forecast, the necessary resources are reserved in those cells.

In this case, a *Resource_Query* message of the handover Protocol will be sent to the next most probable Access-Agents in order to obtain information about available resources and, in multicast domains, to obtain multicast related data, such as the multicast group address. This information is sent back to the requesting Access-Agent in a *Resource_Response* message. After collecting this information and selecting the next Access-Agent, the current Access-Agent provides to the Mobile Node information about the future Access-Agent in a *Handover_Bearer* message, namely, the IP address of the future Access-Agent and the correspondent multicast channels.

In this way, after the handover the Mobile Node will have most probably the session available at the new location, due to the interaction of the handover mechanism with the session management protocol (which is always present in mobile multimedia systems, such as e.g. the IMS in 3GPP). In this case, the new handover mechanism allows also for the reduction of the latency during handover, since when the Mobile Node arrives to new Access Agent the session state is already installed and it only needs to fetch the packets that were missed during handover.

The enhanced handover mechanism of caching and buffering of this embodiment is supported by the following additional messages:
- *Resource_Query:* message sent to query and reserve resources in the most probable Access-Agents for handover;
- *Resource_Response:* message sent to the requesting Access-Agent and containing the information requested (namely the available resources and the multicast group address in the possible foreign network);
- *Handover_Bearer:* after the handover decision, this message is sent by the current Access-Agent to the Mobile Node, providing information related to the future Access-Agent, namely, the IP address of the future Access-Agent and the correspondent multicast channels to be used in it.

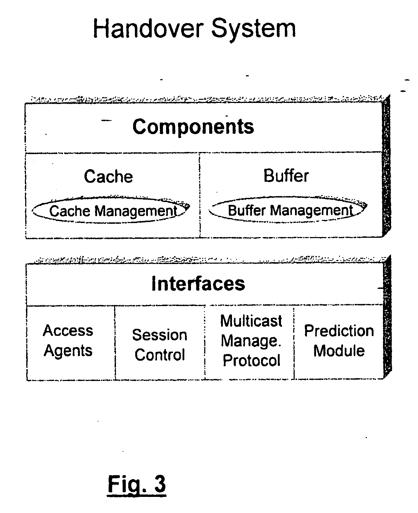

The handover mechanism described above according to one embodiment contains the following interfaces and components enabling seamless mobility of the Mobile Node which are schematically illustrated in Fig. 3:
- Interfaces
   - An interface for interaction with a movement prediction module: to detect the next most probable base station based on the location of the base stations and on the properties of the Mobile Node such as location, moving direction and velocity;
   - An interface for interaction with the Access-Agent that contains the cache: this can be achieved through handover signalling messages that form the new handover protocol. This protocol transfers the context of multi-user sessions from the old to the new predicted Access-Agent, and collects information about the capability and connectivity provided by the latter. At the old Access-Agent, the probed information, combined with knowledge regarding the access technologies, gives support to the handover decision (e.g. by selecting a next agent where the session arrives with better quality - i.e. higher number of flows - and which has an access technology compatible with the mobile device);
   - An interface for interaction with session control mechanisms: when the handover decision is taken, the interaction with session control mechanisms allows for the transfer of the session to the new predicted Access-Agents, for the release of the resources reserved on the old path, and for the release of the resources reserved on the new paths that the Mobile Node is not going to use;
   - An interface for interaction with a multicast management protocol: during the handover process, the handover mechanism in the Mobile Node interacts with the multicast management protocol such as Internet Group Management Protocol (IGMPv3) or the Multicast Listener Discovery protocol (MLDv2) in order to allow the Mobile Node to leave the multicast channel in the old access point or to join the correct multicast channel in the new access point.
- Components
   - Cache: the cache is used to store packets that are forwarded by an agent in the network.
   - Cache management: once the capacity of the cache is attained, packets must be discarded. In this situation, the new packet that arrives will replace the oldest packet that is stored in the cache;
   - Buffer: the buffer is used to store packets. The data in the buffer will be read during handover in order to avoid packet loss. When data is read from the buffer at a lower speed than it is fed, a "buffer overflow" will occur. In the opposite situation, when data enters the buffer at a lower speed that it leaves, a "buffer underflow" will occur;
   - Buffer Management: responsible to supervise the number and identification of the packets present in buffer. This is necessary to know the available space in the buffer and the last packet received.

A handover system according to one embodiment uses the aforementioned components and interfaces, whereas such a system comprises a handover module in the access agents which comprises as components the cache and the cache management, and a handover module in the mobile nodes which comprises the buffer and the buffer management.

The interfaces for interaction with access agents and for interacting with a movement prediction module may be located in the access agent's handover module, whereas the interfaces for interaction with session control mechanisms and for interacting with a multicast management protocol may be located in the mobile node.

As described before, seamless handover is essential for the deployment of single and multi-user mobile services using either unicast or multicast communication. The proposed new handover mechanism according to embodiments described before solves this problem by introducing a mechanism of caching and buffering that avoids the interruption of the flows during handover inside or between heterogeneous networks and avoids packet losses. The buffers, located in the Mobile Nodes, are used to allow for the continuation of data transfer during handover. The caches, located in the Access-Agents, are used after handover to recover the packets that were missed by the Mobile Node during handover. In the enhanced mechanism, the combined use of buffers and caches is associated with a prediction module for predicting the next most probable Access-Agents in order to guarantee the installation of the necessary state.

In the following, the operation of further embodiments of a handover mechanism are presented.

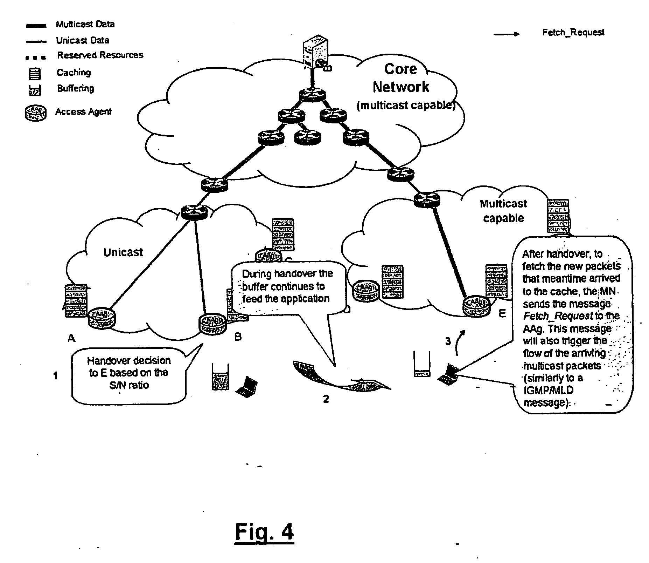

As described in Fig. 4, when a handover occurs (1) the application in the Mobile Node continues to be fed through the packets present in the buffer (2). When the handover is over, the Mobile Node will update its buffer through fetching the missing packets from the cache. To accomplish that, it sends the message Fetch_Request to the Cache (3) requesting the packets that could not be received during handover. In the message is transported information concerning the available space in the Buffer and the ID of the last received packet.

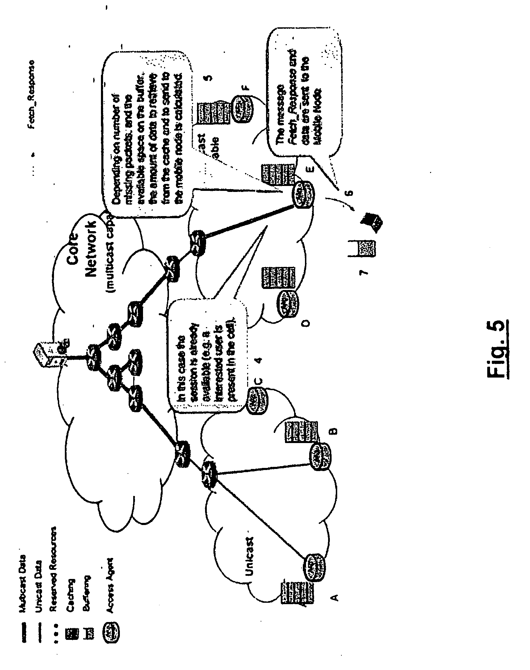

Referring now to Fig. 5, in this case is assumed that session is already present in this Access Agent (4). If this is not the case, it is necessary to proceed with all the necessary steps to subscribe the intended session. When the Fetch_Request message is received by the Cache, the amount of data to retrieve from the cache and to send to the mobile node is calculated from the number of missing packets, the available space on the buffer and the ID of the last packet received in the buffer (5).

Afterwards, a Fetch_Response message is sent to inform the Mobile Node about the amount of information that it will sent (6). Subsequently, the cache sends the missing packets to the Mobile Node. If the available capacity of the buffer is enough to accommodate the missing packets the process will be straightforward. However, when the available capacity on the buffer is lower than the quantity of new packets that arrived in the cache, it may be necessary to discard the exceeding packets that have no space in the buffer.

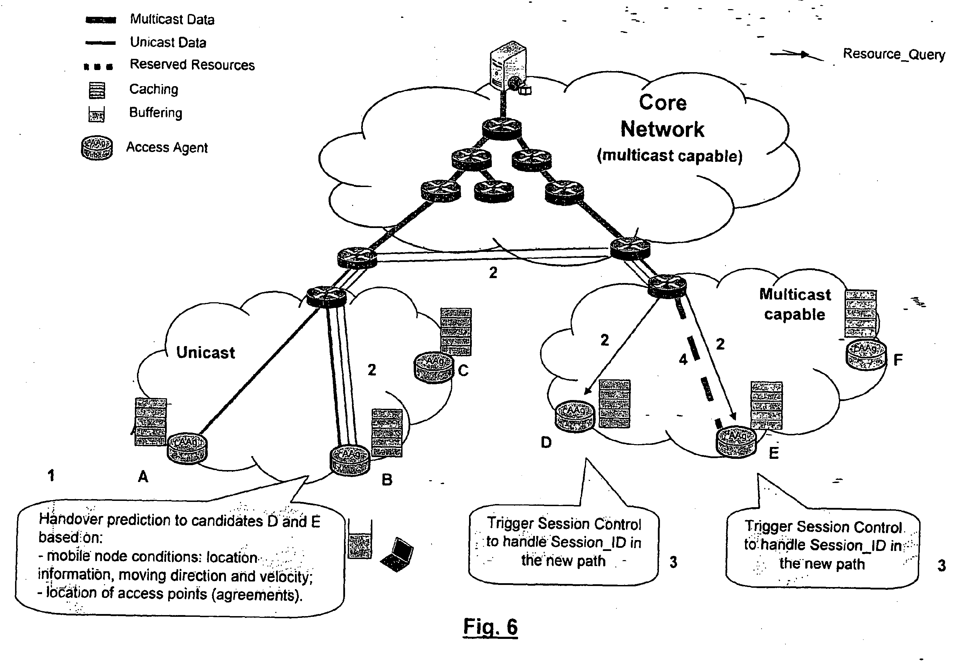

In the following there will be described an embodiment where the handover mechanism supports a prediction mechanism to reserve the necessary resources in the most probable cells to where the Mobile Node could move. Fig. 6 shows a scenario of operation of the handover mechanism when there is a handover from a unicast domain to a multicast domain and the Mobile Node is the receiver of a multi-user session. The current Access-Agent (AAg) predicts (e.g. by referring to or in co-operation with a reduction mechanism) that a handover will be performed to Base Stations located outside the current Access Network. Therefore, the current Access-Agent needs to reserve resources in the future locations, and consequently, wishes to establish a connection with the Access-Agents associated with the predicted Base Stations. In order to perform the resource reservation, the current Access-Agent should discover the addresses of the predicted Access-Agents (1 in Fig. 6). This could be done in a static way through pre-configuration on the same network or based on agreements between different networks. Alternatively the addresses discovery could be done in a dynamic way by querying a DNS-alike service.

*Resource_Query* messages are then sent to the new Access-Agent candidates (operation 2 in Fig. 6). In each candidate Access-Agent, the session control management protocol is triggered in order to handle the resource reservation to the session (operation 3 in Fig. 6). The identification of the session is present in the *Resource_Query* messages.

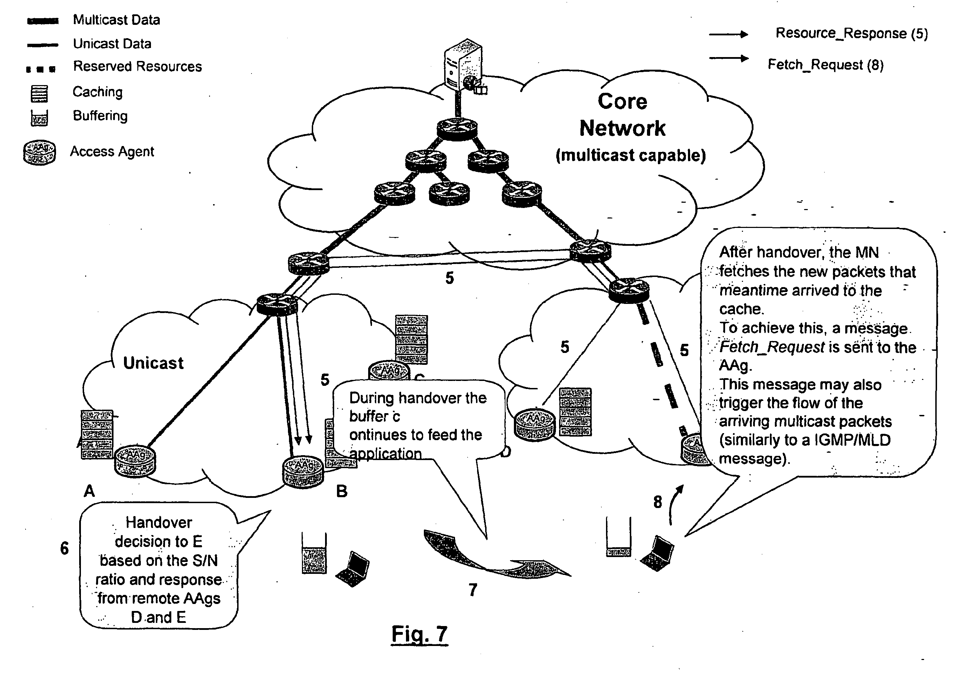

Referring now to Fig. 7, after this information is obtained, the predicted Access-Agents build and send a *Resource_Response* message (operation 5 in Fig. 7) with the result to the Access-Agent that made the request.

Based on the S/N ratio and the response from the Access-Agent candidates, the current Access-Agent in this example decides to handover to Access-Agent E (operation 6 in Fig. 7). This decision may e.g. be based on the S/N ration and the response from the remote access agents D an E. During handover (operation 7 in Fig. 7) packets continue to arrive into the caches, and the buffer continues to feed the application. When the Mobile Node arrives in the new Base Station, it needs to obtain from the cache located in the Access-Agent the new packets that have arrived in the meanwhile (operation 8 in Fig. 7). The Mobile Node will update its buffer through a fetch of the missing packets available in the cache. To achieve this, a message *Fetch_Request* is sent to the access agent AAg. This message in one embodiment also triggers the flow of the arriving multicast packets (analogous to an IGMP/MLD message).

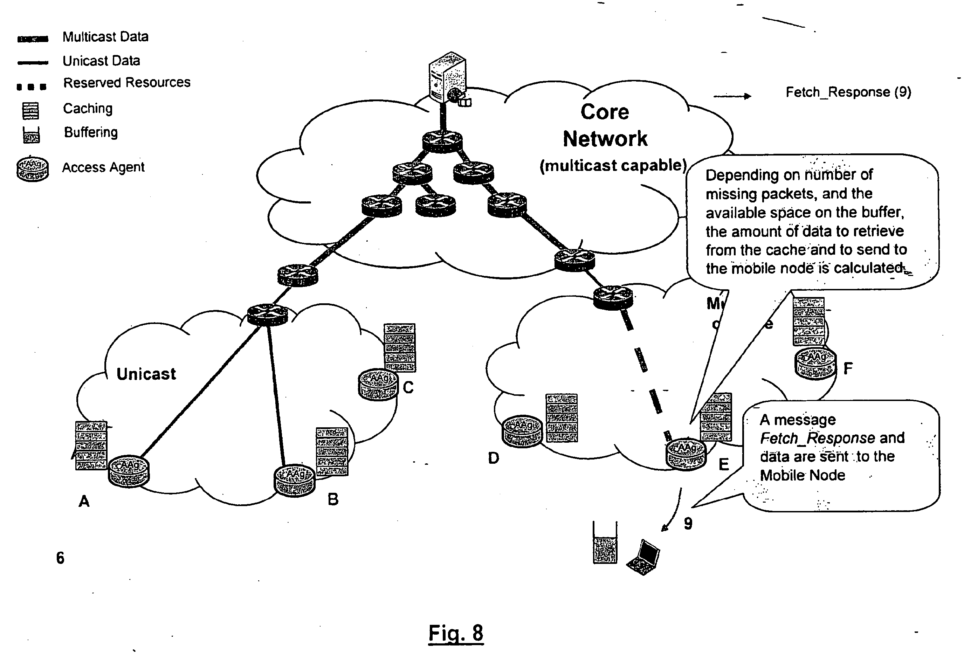

Referring now to Fig. 8, the response of the new access agent to the *Fetch_Request* is described. At first, depending on the number of missing packets, and the available space on the buffer, the amount of data to retrieve from the cache and to be sent to the mobile node is calculated. Then (operation 9 in Fig. 8) message *Fetch_Response* and the missing data are sent to the Mobile Node.

## Claims

1. A method for performing a seamless handover of a mobile node on which an application is running which receives data from a first access node to a second access node, said method comprising:
receiving data by a buffer of said mobile node;
consuming by said application the data stored in said buffer during handover while no new data is received by said buffer;
after handover, requesting by said mobile node data which have been received by a cache of said second access node to request therefrom
the missing packets that arrived during the handover; wherein
said requesting comprises sending a fetch request message comprising the ID of the last packet which was received and stored in the buffer, and transmission of missing packets from said cache starts with the packet having the ID next to the one which was received by said buffer.

2. The method of claim 1, further comprising:
based on a prediction of the most probable next access nodes, sending a resource query to request reservation of resources in the most probable next access nodes;
receiving a resource query response containing information about the reservation.

3. The method of one of the preceding claims, wherein said second access node is in a multicast capable domain, and
if on said second access node the same session is already running, said mobile node performing the handover joins said session.

4. The method of claim 2 or 3, wherein said resource query response contains information about the available resources and the multicast group address; said method further comprising:
sending a handover bearer message to said mobile node comprising the IP address of the second access node and the multicast channels to be used in it.

5. The method of one of claims 2 to 4, wherein the decision to which next access node the handover is performed is based on the information contained in said resource query response.

6. A mobile node for performing a seamless handover while on said mobile node an application is running which receives data from a first access node to a second access node, said mobile node comprising:
a buffer receiving data from said first access node;
a consuming module for consuming by said application the data stored
in said buffer during handover while no new data is received by said buffer;
a requesting module for, after handover, requesting data which have been received by a cache of said second access node to request therefrom the missing packets that arrived during the handover, wherein
said requesting module is adapted to send a fetch request message comprising the ID of the last packet which was received and stored in the buffer, and
such that transmission of missing packets from said cache starts with the packet having the ID next to the one which was received by said buffer.

7. The mobile node of claim 6, wherein said second node is located in a multicast capable domain, and
if on said second node said session is already running, said mobile node joins said session.

8. The mobile node of one of claims 6 to 7, wherein said first access node receives a resource query response from said second access node which contains information about the available resources and the multicast group address; said mobile node further comprising:
a module for receiving a handover bearer message from said first access node comprising the IP address of the second access node and the multicast channels to be used in it.

9. An access node in a mobile network for supporting a seamless handover of a mobile node on which an application is running which receives data from a second access node and which should handover to said access node, said mobile node receiving data by a buffer and said application consuming the data stored in said buffer during handover while no new data being received by said buffer, said access node comprising:
a cache for caching data which is to be sent to said mobile node;
a module for receiving after handover a request from said mobile node
to request from said cache the missing packets that arrived during the handover,
wherein said request comprises a fetch request message comprising the ID of the last packet which was received and stored in said buffer, and said access node further comprising:
a cache management module for identifying and transmitting said missing packets such that a transmission of missing packets from said cache starts with the packet having the ID next to the one which was received by said buffer.

10. The access node of claim 9, further comprising:
a module for receiving, based on a prediction of the most probable next access nodes to which said mobile node will perform a handover, from said second access node a resource query to request reservation of resources in the most probable next access nodes;
a module for sending a resource query response containing information about the reservation.

11. The access node of one of claims 9 to 10, wherein said access node is in a multicast capable domain, and
if on said access node the same session as on said mobile node is already running, said mobile node performing the handover joins said session.

12. The access node of one of claim 9 to 11, wherein said resource query response contains information about the available resources and the multicast group address to enable said second access node to send a handover bearer message to said mobile node comprising the IP address of the second access node and the multicast channels to be used in it.

13. A handover system comprising:
a mobile node according to one of claims 6 to 8;
an access node according to one of claims 9 to 12 as first access node, and an access node according to one of claims 9 to 12 as second access node from which said mobile node performs a handover to said first access node.

14. A computer program comprising program code which when being executed on a computer enables said computer to one of the following:
carry out a method of one of claims 1 to 5;
to operate as a mobile node according of one of claims 6 to 8;
to operate as a an access node according of one of claims 9 to 12.

## Patentansprüche

1. Verfahren zum Durchführen eines nahtlosen Handovers (seamless handover) eines mobilen Knotens, auf dem eine Anwendung läuft, die Daten empfängt von einem ersten Zugriffsknoten zu einem zweiten Zugriffsknoten, wobei das Verfahren aufweist:
Empfangen von Daten durch einen Puffer des mobilen Knotens;
Konsumieren der in dem Puffer gespeicherten Daten durch die Anwendung während des Handovers, während keine neuen Daten von dem Puffer empfangen werden;
nach dem Handover Anfordern von Daten durch den mobilen Knoten, welche von einem Cache des zweiten Zugriffsknotens empfangen wurden, um von diesem die fehlenden Pakete anzufordern, die während des Handovers angekommen sind, wobei
das Anfordern das Absenden einer Abruf-Anforderungsnachricht umfasst, welche die ID des letzten Pakets umfasst, welches empfangen und in dem Puffer gespeichert wurde, und
die Übertragung von fehlenden Paketen aus dem Cache mit dem Paket startet, welches die ID aufweist, die als nächstes demjenigen folgt, das von dem Puffer empfangen wurde.

2. Verfahren nach Anspruch 1, ferner aufweisend:
basierend auf einer Vorhersage des wahrscheinlichsten nächsten Zugriffknotens, Senden einer Resourcen-Anfrage, um die Reservierung von Resourcen in dem wahrscheinlichsten nächsten Zugriffsknoten anzufordern;
Empfangen einer Resourcen-Anfrage-Antwort, welche Informationen über die Reservierung enthält.

3. Verfahren nach einem der vorhergehenden Ansprüche, wobei der zweite Zugriffsknoten in einer multicast-fähigen Domain liegt, und
falls auf dem zweiten Zugriffsknoten die gleiche Session bereits läuft, der mobile Knoten, welcher den Handover durchführt, sich der Session anschließt.

4. Verfahren nach Anspruch 2 oder 3, wobei die Resourcen-Anfrage-Antwort Informationen über die verfügbaren Resourcen und die Multicast-Gruppenadresse enthält, wobei das Verfahren ferner aufweist:
Senden einer Handover-Bearer-Nachricht an den mobilen Knoten umfassend die IP-Adresse des zweiten Zugriffsknotens und die bei diesem zu verwendenden Multicast-Kanäle.

5. Verfahren nach einem der Ansprüche 2 bis 4, wobei die Entscheidung zu welchem nächsten Zugriffsknoten der Handover durchgeführt werden soll auf den Informationen, die in der Resourcen-Anfragen-Antwort enthalten sind, basiert.

6. Mobiler Knoten zum Durchführen eines nahtlosen Handovers von einem ersten Zugriffsknoten zu einem zweiten Zugriffsknoten während auf dem mobilen Knoten eine Anwendung läuft, welche Daten empfängt, wobei der mobile Knoten aufweist:
einen Puffer, der Daten von dem ersten Zugriffsknoten empfängt;
ein Verbrauchsmodul zum Verbrauchen der in dem Puffer gespeicherten Daten durch die Anwendung während des Handovers, während keine neuen Daten von dem Puffer empfangen werden;
ein Anforderungsmodul, um nach dem Handover Daten anzufordern, die von einem Cache des zweiten Zugriffsknotens empfangen wurden, um von diesem die fehlenden Pakete, die während des Handovers angekommen sind, anzufordern, wobei
das Anforderungsmodul angepasst ist, eine Abruf-Anforderungsnachricht zu senden, welche die ID des letzten Pakets umfasst, das empfangen und in dem Puffer gespeichert wurde, und
derart, dass die Übertragung von fehlenden Paketen von dem Cache mit demjenigen Paket startet, welches die ID aufweist, die auf dasjenige folgt, welches von dem Puffer empfangen wurde.

7. Mobiler Knoten nach Anspruch 6, wobei der zweite Knoten in einer multicast-fähigen Domain liegt, und
falls auf dem zweiten Knoten die Session bereits läuft, der zweite Knoten sich der Session anschließt.

8. Mobiler Knoten nach einem der Ansprüche 6 bis 7, wobei der erste Zugriffsknoten eine Resourcen-Anfrage-Antwort von dem zweiten Zugriffsknoten empfängt, welche Informationen über die verfügbaren Resourcen und die Multicast-Gruppenadresse enthält, wobei der mobile Knoten ferner aufweist:
ein Modul zum Empfangen einer Handover-Bearer-Nachricht von dem ersten Zugriffsknoten, welche die IP-Adresse des zweiten Zugriffsknotens und die in ihm zu verwendenden Multicast-Kanäle aufweist.

9. Zugriffsknoten in einem mobilen Netzwerk zum Unterstützen eines nahtlosen Handovers (seamless handover) eines mobilen Knotens, auf dem eine Anwendung läuft, welche Daten von einem zweiten Zugriffsknoten empfängt und welcher zu dem Zugriffsknoten einen Handover durchführen sollte, wobei der mobile Knoten Daten durch einen Puffer empfängt und die Anwendung die Daten, die in dem Puffer gespeichert werden, während des Handovers konsumiert, während keine neuen Daten von dem Puffer empfangen werden, wobei der Zugriffsknoten aufweist:
einen Cache zum Cachen von Daten, welche zu dem mobilen Knoten gesandt werden sollen;
ein Modul zum Empfangen einer Anforderung von dem mobilen Knoten nach dem Handover, um von dem Cache die fehlenden Pakete, die während des Handovers angekommen sind, anzufordern,
wobei die Anforderung eine Abruf-Anforderungsnachricht umfasst, welche die ID des letzten Pakets aufweist, das empfangen und in dem Puffer gespeichert wurde, und wobei der Zugriffsknoten ferner aufweist:
ein Cache-Management-Modul zum Identifizieren und Übertragen der fehlenden Pakete derart, dass eine Übertragung von fehlenden Paketen aus dem Cache mit demjenigen Paket startet, welches die ID aufweist, die auf dasjenige folgt, was von dem Puffer empfangen wurde.

10. Zugriffsknoten nach Anspruch 9, ferner aufweisend:
ein Modul zum Empfangen, basierend auf einer Vorhersage des wahrscheinlichsten nächsten Zugriffsknotens, zu dem der mobile Knoten ein Handover durchführen wird, von dem zweiten Zugriffsknoten einer Resourcen-Anfrage, um die Reservierung von Resourcen in dem wahrscheinlichsten nächsten Zugriffsknoten anzufordern;
ein Modul zum Senden einer Resourcen-Anfrage-Antwort, welche Informationen über die Reservierung enthält.

11. Zugriffsknoten nach einem der Ansprüche 9 bis 10, wobei der Zugriffsknoten in einer multicast-fähigen Domain liegt und
falls auf dem Zugriffsknoten die gleiche Session wie auf dem mobilen Knoten bereits läuft, der mobile Knoten, der den Handover durchführt, sich der Session anschließt.

12. Zugriffsknoten nach einem der Ansprüche 9 bis 11, wobei die Resourcen-Anfrage-Antwort Informationen über die verfügbaren Resourcen und die Multicast-Gruppenadresse enthält, um dem zweiten Zugriffsknoten zu ermöglichen, eine Handover-Bearer-Nachricht an den mobilen Knoten zu senden, welche die IP-Adresse des zweiten Zugriffsknotens und die in diesem verwendeten Multicast-Kanäle umfasst.

13. Handover-System, welches aufweist:
einen mobilen Knoten gemäß einem der Ansprüche 6 bis 8;
einen Zugriffsknoten gemäß einem der Ansprüche 9 bis 12 als ersten Zugriffsknoten, und
einen Zugriffsknoten gemäß einem der Ansprüche 9 bis 12 als zweiten Zugriffsknoten, von dem der mobile Knoten einen Handover zu dem ersten Zugriffsknoten durchführt.

14. Computerprogramm aufweisend Programmcode, der, wenn er auf einem Computer ausgeführt wird, dem Computer eines der folgenden ermöglicht:
Ausführen eines Verfahrens gemäß einem der Ansprüche 1 bis 5;
Agieren als mobiler Knoten gemäß einem der Ansprüche 6 bis 8;
Agieren als Zugriffsknoten gemäß einem der Ansprüche 9 bis 12.

## Revendications

1. Procédé pour effectuer un transfert sans interruption d'un noeud mobile sur lequel une application est exécutée qui reçoit des données provenant d'un premier noeud d'accès vers un second noeud d'accès, ledit procédé comprenant les étapes consistant à :
recevoir des données d'un tampon dudit noeud mobile ;
consommer, par ladite application, les données stockées dans ledit tampon au cours du transfert, tandis qu'aucune nouvelle donnée n'est reçue par ledit tampon ;
après le transfert, demander par ledit noeud mobile des données qui ont été reçues par un cache dudit second noeud d'accès pour demander à partir de celui-ci les paquets manquants qui sont arrivés au cours du transfert ; dans lequel
ladite demande comprend d'envoyer un message de demande d'extraction comprenant l'identifiant du dernier paquet qui a été reçu et stocké dans le tampon, et la transmission des paquets manquants depuis ledit cache commence avec le paquet ayant l'identifiant qui suit celui qui a été reçu par ledit tampon.

2. Procédé selon la revendication 1, comprenant en outre les étapes consistant à :
en se basant sur une prédiction des prochains noeuds d'accès les plus probables, envoyer une requête de ressources pour demander une réservation de ressources dans les prochains noeuds d'accès les plus probables ;
recevoir une réponse de requête de ressources contenant des informations concernant la réservation.

3. Procédé selon l'une des revendications précédentes, dans lequel ledit second noeud d'accès est dans un domaine supportant la multidiffusion, et
si sur ledit second noeud d'accès, ladite session est déjà en cours d'exécution, ledit noeud mobile effectuant le transfert rejoint ladite session.

4. Procédé selon la revendication 2 ou la revendication 3, dans lequel ladite réponse de requête de ressources contient des informations sur les ressources disponibles et l'adresse de groupe de multidiffusion ; ledit procédé comprenant en outre les étapes consistant à :
envoyer un message de support de transfert audit noeud mobile comprenant l'adresse IP du second noeud d'accès et les canaux de multidiffusion à utiliser dans ce dernier.

5. Procédé selon une des revendications 2 à 4, dans lequel la décision précisant vers lequel noeud d'accès suivant le transfert est effectué est basée sur les informations contenues dans ladite réponse de requête de ressources.

6. Noeud mobile pour effectuer un transfert sans interruption tandis que sur ledit noeud mobile, une application est exécutée qui reçoit des données provenant d'un premier noeud d'accès vers un second noeud d'accès, ledit noeud mobile comprenant :
un tampon recevant des données dudit premier noeud d'accès ;
un module de consommation pour consommer, par ladite application, les données stockées dans ledit tampon au cours du transfert, tandis qu'aucune nouvelle donnée n'est reçue par ledit tampon ;
un module de demande pour, après le transfert, demander des données qui ont été reçues par un cache dudit second noeud d'accès pour demander à partir de celui-ci les paquets manquants qui sont arrivés au cours du transfert ; dans lequel
ledit module de demande est adapté pour envoyer un message de demande d'extraction comprenant l'identifiant du dernier paquet qui a été reçu et stocké dans le tampon,
de manière à ce que la transmission des paquets manquants depuis ledit cache commence avec le paquet ayant l'identifiant qui suit celui qui a été reçu par ledit tampon.

7. Noeud mobile selon la revendication 6, dans lequel ledit second noeud est situé dans un domaine supportant la multidiffusion, et
si sur ledit second noeud, ladite session est déjà en cours d'exécution, ledit noeud mobile rejoint ladite session.

8. Noeud mobile selon une des revendications 6 à 7, dans lequel ledit premier noeud d'accès reçoit une réponse de requête de ressources depuis ledit second noeud d'accès qui contient des informations sur les ressources disponibles et l'adresse de groupe de multidiffusion, ledit noeud mobile comprenant en outre :
un module pour recevoir un message de support de transfert depuis ledit premier noeud d'accès comprenant l'adresse IP du second noeud d'accès et les canaux de multidiffusion à utiliser dans ce dernier.

9. Noeud d'accès dans un réseau mobile pour supporter un transfert sans interruption d'un noeud mobile sur lequel une application est exécutée qui reçoit des données provenant d'un second noeud d'accès et qui effectuera un transfert vers ledit noeud d'accès, ledit noeud mobile recevant des données par un tampon et ladite application consommant les données stockées dans ledit tampon au cours du transfert, tandis qu'aucune nouvelle donnée n'est reçue par ledit tampon, ledit noeud d'accès comprenant :
un cache pour placer en mémoire cache des données qui sont à envoyer audit noeud mobile ;
un module pour recevoir après le transfert une demande provenant dudit noeud mobile pour demander auprès dudit cache les paquets manquants qui sont arrivés au cours du transfert ;
dans lequel ladite demande comprend un message de demande d'extraction comprenant l'identifiant du dernier paquet qui a été reçu et stocké dans ledit tampon, et ledit noeud d'accès comprenant en outre :
un module de gestion de cache pour identifier et transmettre lesdits paquets manquants de telle manière qu'une transmission de paquets manquants depuis ledit cache commence avec le paquet ayant l'identifiant qui suit celui qui a été reçu par ledit tampon.

10. Noeud d'accès selon la revendication 9, comprenant en outre :
un module pour recevoir, en se basant sur une prédiction des prochains noeuds d'accès les plus probables vers lesquels ledit noeud mobile va effectuer un transfert, depuis ledit second noeud d'accès, une requête de ressources pour demander une réservation de ressources dans les prochains noeuds d'accès les plus probables ;
un module pour envoyer une réponse de requête de ressources contenant des informations concernant la réservation.

11. Noeud d'accès selon une des revendications 9 à 10, dans lequel ledit noeud d'accès est dans un domaine supportant la multidiffusion , et
si sur ledit noeud d'accès, la même session que sur ledit noeud mobile est déjà en cours d'exécution, ledit noeud mobile effectuant le transfert rejoint ladite session.

12. Noeud d'accès selon une des revendications 9 à 11, dans lequel ladite réponse de requête de ressources contient des informations sur les ressources disponibles et l'adresse de groupe de multidiffusion pour permettre audit second noeud d'accès d'envoyer un message de support de transfert audit noeud mobile comprenant l'adresse IP du second noeud d'accès et les canaux de multidiffusion à utiliser dans ce dernier.

13. Système de transfert comprenant :
un noeud mobile selon une des revendications 6 à 8 ;
un noeud d'accès selon une des revendications 9 à 12 comme premier noeud d'accès, et
un noeud d'accès selon une des revendications 9 à 12 comme second noeud d'accès à partir duquel ledit noeud mobile effectue un transfert vers ledit premier noeud d'accès.

14. Programme informatique comprenant un code de programme qui, lorsqu'il est exécuté sur un ordinateur, permet audit ordinateur d'effectuer une des opérations suivantes :
exécuter un procédé selon une des revendications 1 à 5 ;
opérer comme un noeud mobile selon une des revendications 6 à 8 ;
opérer comme un noeud d'accès selon une des revendications 9 à 12.
